# EUROPEAN PATENT APPLICATION

(11) **EP 2 540 585 A2**
(43) Date of publication of application: **02.01.2013**
(21) Application number: 12173000.6
(22) Date of filing: 21.06.2012
(51) Int. Cl.: B60S 5/06, B60K 1/04

(54) **Conveying apparatus**

(30) Priority: 27.06.2011 JP 2011142101
(71) Applicant: Kabushiki Kaisha Toyota Jidoshokki, Kariya-shi, Aichi 448-8671 (JP)
(72) Inventor: Ojima, Yoshio, Kariya-shi,, Aichi 448-8671 (JP); Fukagawa, Takahiro, Kariya-shi,, Aichi 448-8671 (JP); Murase, Takashi, Kariya-shi,, Aichi 448-8671 (JP); Motoya, Akihiko, Kariya-shi,, Aichi 448-8671 (JP); Maki, Hideyuki, Kariya-shi,, Aichi 448-8671 (JP)
(74) Representative: TBK

(57) **Abstract**

A conveying apparatus is configured to attach a battery unit to a vehicle body at an attachment position by engaging at least three first fastening portions, which are arranged in the vehicle body, respectively with at least three corresponding second fastening portions, which are arranged in the battery unit. The conveying apparatus includes at least three mounts, at least three individual lifting mechanisms, and an individual control unit. The second fastening portions are respectively mounted on the mounts. The individual lifting mechanisms individually lift the mounts to raise the battery unit to the attachment position. The individual control unit is configured to individually control the individual lifting mechanisms.

## Description

### BACKGROUND OF THE INVENTION

The present invention relates to a conveying apparatus for attaching a battery unit to a vehicle body of an electric vehicle or the like.

Japanese Laid-Open Utility Model Publication No. 54-36727 discloses a lifting apparatus (corresponding to conveying apparatus) that lifts a battery to a predetermined attachment position with respect to a vehicle body to attach the battery to the vehicle body. The lifting apparatus includes four lifting supports, a power transmission mechanism, and a single motor. A battery can be placed on the lifting supports. The power transmission mechanism includes a clutch. The motor lifts all of the lifting supports with the power transmission mechanism. In Japanese Laid-Open Utility Model Publication No. 54-36727, a battery hook is arranged at the lower side of the vehicle body. The battery is attached to the battery hook.

To lift the lifting supports and attach the battery to the vehicle body with the lifting apparatus, an operation unit is operated to switch the clutch and drive the motor. This lifts the battery to the attachment position. The battery is then engaged, or hooked, to the battery hook thereby completing the attachment.

Japanese Laid-Open Patent Publication No. 2010-173364 discloses a battery exchanging apparatus (corresponding to conveying apparatus) that includes a position detection sensor and a fastening means, which holds a battery and fastens the battery to a vehicle body. The battery exchanging apparatus detects an inclination state of the vehicle body with the detection sensor and adjusts an inclination state of the fastening means. Then, the battery exchanging apparatus lifts and attaches the battery to the vehicle body.

However, the conveying apparatuses of Japanese Laid-Open Utility Model Publication No. 54-36727 and Japanese Laid-Open Patent Publication No. 2010-173364 attach a battery, that is, a battery unit including a plurality of batteries, to a vehicle body. Thus, these conveying apparatuses require high strength and large output that are greater than or equal to the values that would be necessary when just lifting and lowering a battery unit.

More specifically, it is preferable that the battery unit be attached and fixed to the vehicle body at three or more locations so that the battery unit is stably supported when the vehicle travels. For example, the vehicle body may include fastening portions, and the battery unit may include fastened portions engaged with and disengaged from the fastening portions. To stably attach the battery unit to the vehicle body, it is preferable that there be three fastening portions and three fastened portions. The coordinates of each set of the fastening portion and fastened portion are determined. The three sets of coordinates determine a hypothetical plane at the vehicle body side and a hypothetical plane at the battery unit side. Thus, in a state in which the battery unit is engaged, the hypothetical plane at the vehicle body side and the hypothetical plane at the battery unit side are flat and are parallel to each other.

In particular, the battery unit of an electrical vehicle or the like is heavy. Thus, it is preferable that the vehicle body and the battery unit be in engagement at four or more locations. In this case, as described above, four or more sets of coordinates determine the hypothetical plane at the vehicle body side and the hypothetical plane at the battery unit side. Thus, to attach the battery unit to the vehicle body in a preferable manner, it is required that the hypothetical plane at the vehicle body side be parallel to the hypothetical plane at the battery unit side. Otherwise, the hypothetical plane at the vehicle body side is required to be twisted in the same manner as the hypothetical plane at the battery unit side.

However, the heavy battery unit causes deformations in the battery unit and the vehicle body. Further, the fastening portions and the fastened portions are manufactured with tolerances. Such deformations and tolerances may displace at least some of the sets of fastening portions and fastened portions at their engagement positions prior to attachment of the battery unit.

Thus, in the conveying apparatus described above, when the four lifting supports are simultaneously lifted to attach the battery to the vehicle body, some sets of the fastening portions and fastened portions first come into engagement.

In this conveying apparatus, after some sets of the fastening portions and fastened portions come into engagement, the four lifting supports continue to simultaneously and forcibly lift the battery unit until every set of fastening portions and fastened portions are engaged. In this case, the conveying apparatus would raise part of the vehicle body to attach the battery unit. Thus, the conveying apparatus is required to be provided with sufficient strength and output for raising the vehicle body at a biased position. This enlarges the conveying apparatus.

### SUMMARY OF THE INVENTION

It is an object of the present invention to provide a conveying apparatus that ensures attachment of a battery unit to a vehicle body without the conveying apparatus being enlarged.

To achieve the above object, one aspect of the present invention is a conveying apparatus configured to attach a battery unit to a vehicle body at an attachment position by engaging at least three first fastening portions, which are arranged in the vehicle body, respectively with at least three corresponding second fastening portions, which are arranged in the battery unit. The conveying apparatus includes at least three mounts, at least three individual lifting mechanisms, and an individual control unit. The second fastening portions are mounted on the at least three mounts, respectively. The at least three individual lifting mechanisms individually lift the mounts to raise the battery unit to the attachment position. The individual control unit is configured to individually control the individual lifting mechanisms.

In the above structure, when attaching the battery unit to the vehicle body, the individual control unit individually drives the plurality of individual lifting mechanisms to individually lift the plurality of mounts. This lifts the battery unit to the attachment position of the vehicle body. In this case, since the mounts are individually raised, the battery unit may be positioned in any manner in the vertical direction.

For example, the at least three first fastening portions, which are arranged on the vehicle body, and the at least three second fastening portions, which are arranged on the battery unit, engage the vehicle body and the battery unit. At least three sets of coordinates determined by each set of the engaged first and second fastening portions determine a flat hypothetical plane at the side of the battery unit at any height. That is, the flat hypothetical plane at the battery unit side can be set to any inclination. Thus, even when manufacturing tolerances and the weight of the battery unit cause deformation such that hypothetical planes are not parallel prior to the attachment, the hypothetical plane at the battery unit side can be set to be parallel to the hypothetical plane at the vehicle body side. This stably attaches the battery unit to the vehicle body.

Further, for example, at least four first fastening portions, which are arranged on the vehicle body, and at least four second fastening portions, which are arranged on the battery unit, engage the vehicle body and the battery unit. At least four sets of coordinates determined by each set of the engaged first and second fastening portions determine a flat hypothetical plane at the side of the battery unit at any height. That is, the flat hypothetical plane at the battery unit side can be set to any inclination. Thus, even when manufacturing tolerances and the weight of the battery unit twist at least one of the hypothetical planes thereby displacing the hypothetical planes, the battery unit can still be stably attached to the vehicle body.

In detail, in this conveying apparatus, when some sets of the first and second fastening portions are engaged and the other sets of the first and second fastening portions are not engaged, the individual lifting mechanism corresponding to the engaged first and second fastening portions stops lifting, and the individual lifting mechanism corresponding to the non-engaged first and second fastening portions continues lifting. Thus, the position (inclination and twist) of the battery unit can be changed in the vertical direction. In this manner, every set of the first and second fastening portions can be engaged. This stably attaches the battery unit to the vehicle body.

Accordingly, the conveying apparatus of the present invention ensures that the battery unit is attached to the vehicle body while avoiding enlargement of the conveying apparatus.

The conveying apparatus of the present invention is mainly used to attach a battery unit to a vehicle body of a vehicle driven by the power accumulated in a battery. In the present invention, the concept of a vehicle body includes not only the vehicle body of a passenger automobile but also the vehicle body of an industrial vehicle and an automated guided vehicle.

Further, in the conveying apparatus of the present invention, a state in which a second fastening portion is mounted on a mount includes a state in which the second fastening portion is directly mounted in direct contact with the mount and a state in which a mount and the battery unit are brought into contact so that the second fastening portion is indirectly mounted on the mount.

Moreover, the fastening portion and the second fastening portion in the conveying apparatus of the present invention may adopt various forms as long as they can be engaged with each other to attach the battery unit to the vehicle body. For instance, a lock device and a striker can be used.

Preferably, the individual control unit includes at least three detection units and a stop unit.

Each of the three detection units corresponds to a set including one of the first fastening portions, one of the second fastening portions, and one of the individual lifting mechanisms. Each of the three detection units is arranged on either one of the corresponding first fastening portion and the corresponding second fastening portion. Each detection unit is configured to transmit a detection signal when the corresponding first fastening portion and second fastening portion are engaged with each other. The stop unit is configured to stop a raising operation, in response to the detection signal, performed by the individual lifting mechanism corresponding to the detection unit that transmitted the detection signal.

In this case, the lifting performed by the individual lifting mechanism corresponding to the set of engaged first and second fastening portions can be stopped, and the lifting of the individual lifting mechanism corresponding to the set of non-engaged fastening and fastened portions can be continued. This facilitates the attachment of the battery unit to the vehicle body. The transmission of the detection signal includes suspension of a continuous transmission. It is preferable that the individual lifting mechanisms all lift the mounts at the same speed until at least one set of fastening portion and fastened portion are engaged or until all of the mounts reach a certain height.

Preferably, the conveying apparatus further includes a support, an entire lifting mechanism, and an entire control unit. The three individual lifting mechanisms are arranged on the support. The entire lifting mechanism lifts the support. The entire control unit is configured to control the entire lifting mechanism.

In this case, in addition to lifting each mount with the corresponding lifting mechanism, the support can be lifted to simultaneously raise all of the mounts. Thus, in this conveying apparatus, the battery unit can be efficiently attached to the vehicle body.

Preferably, the entire control unit controls the entire lifting mechanism to lift the support to a preset height. The individual control unit then individually controls the individual lifting mechanisms to individually lift the mounts.

In this case, the battery unit is readily attached to the vehicle body.

Preferably, each of the first fastening portions is either one of a striker and a lock device, which fixes or releases the striker, and each of the second fastening portions is the other one of the striker and the lock device. The lock device includes a housing, a latch, and a pole. The housing includes an inlet that allows for entrance of the striker. The latch is supported pivotally about a first axis by the housing. The pole fixes and restricts pivoting of the latch. The latch is configured to switch between a hooking state, in which the latch hooks the striker in the inlet, and a release state in which the latch releases the striker.

In this case, the structure of the vehicle body can be simplified. This increases the degree of freedom of design for the attachment position or the like of the battery unit in the vehicle body.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a side view showing a conveying apparatus according to one embodiment of the present invention when a battery unit is attached to and removed from a vehicle body;
Fig. 2 is a side view showing the conveying apparatus of Fig. 1 when the battery unit is attached to and removed from the vehicle body;
Fig. 3 is a cross-sectional view showing a striker device, a lock device, a mount, and a extendible rod of Fig. 1;
Fig. 4A is a perspective view showing a state in which the battery unit and the lock device are mounted on the mounts of Fig. 1 and the extendible rods are in an extended state;
Fig. 4B is a perspective view showing the extendible rods of Fig. 4A in a retracted state;
Fig. 5A is a side view showing a state in which an entire lifting mechanism of Fig. 1 is in a lifted state;
Fig. 5B is a side view showing a state in which the entire lifting mechanism is in a lifted state and the extendible rods of Fig. 5A are in an extended state;
Fig. 6A is a side view showing a pin of Fig. 3 when extended to by a first length;
Fig. 6B is a side view showing the pin of Fig. 3 when extended to a second length;
Fig. 7 is a flowchart showing the control of the conveying apparatus when attaching the battery unit to the vehicle body of Fig. 1;
Fig. 8 is a cross-sectional view showing the striker device, the lock device, and the mount during the attachment of the battery unit to the vehicle body of Fig. 1;
Fig. 9 is a cross-sectional view showing the striker device, the lock device, and the mount during the attachment of the battery unit to the vehicle body of Fig. 1;
Fig. 10 is a cross-sectional view showing the striker device, the lock device, and the mount during the attachment of the battery unit to the vehicle body of Fig. 1;
Fig. 11 is a cross-sectional view showing the striker device, the lock device, and the mount upon completion of the attachment of the battery unit to the vehicle body of Fig. 1;
Fig. 12 is a cross-sectional view showing the striker device, the lock device, and the mount during removal of the battery unit from the vehicle body of Fig. 1; and
Fig. 13 is a cross-sectional view showing the striker device, the lock device, and the mount during removal of the battery unit from the vehicle body of Fig. 1.

### DETAILED DESCRIPTION OF THE INVENTION

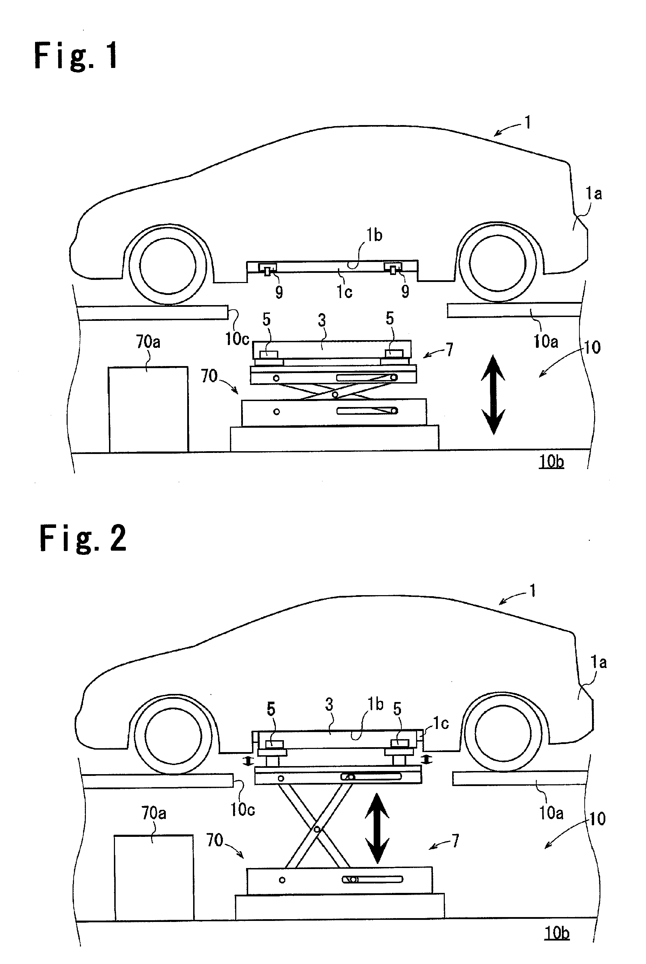

One embodiment of the present invention will now be described with reference to the drawings. As shown in Figs. 1 and 2, in the present embodiment, a conveying apparatus 7 attaches and removes a battery unit 3 to and from a vehicle body 1 a of an electric vehicle 1 at a battery exchange station 10 (hereinafter referred to as the station 10).

The station 10 includes an upper floor 10a and a lower floor 10b, which is located under the upper floor 10a. The upper floor 10a includes a communication port 10c, which is in communication with the lower floor 10b. An electric vehicle 1 can be parked on the upper floor 10a.

The electric vehicle 1 includes a vehicle body 1 a. A lower part of the vehicle body 1 a includes a mounting cavity 1b, which receives the battery unit 3. The vehicle body 1 a includes two frames 1 c, which extend in a front to rear direction of the vehicle body 1 a and form the two sideward edges of the mounting cavity 1 b.

The conveying apparatus 7 lifts the battery unit 3, which includes a plurality of lock devices 5, through the communication port 10c from under the upper floor 10a to attach the battery unit 3 to the mounting cavity 1 b of the electric vehicle 1, which includes a plurality of striker devices 9. Four striker devices 9 are arranged on the vehicle body 1 a, and four lock devices 5 are arranged on the battery unit 3. The conveying apparatus 7 includes a conveying apparatus main body 70 and a controller 70a, which are arranged on the lower floor 10b of the station 10. The controller 70a serves as a control unit.

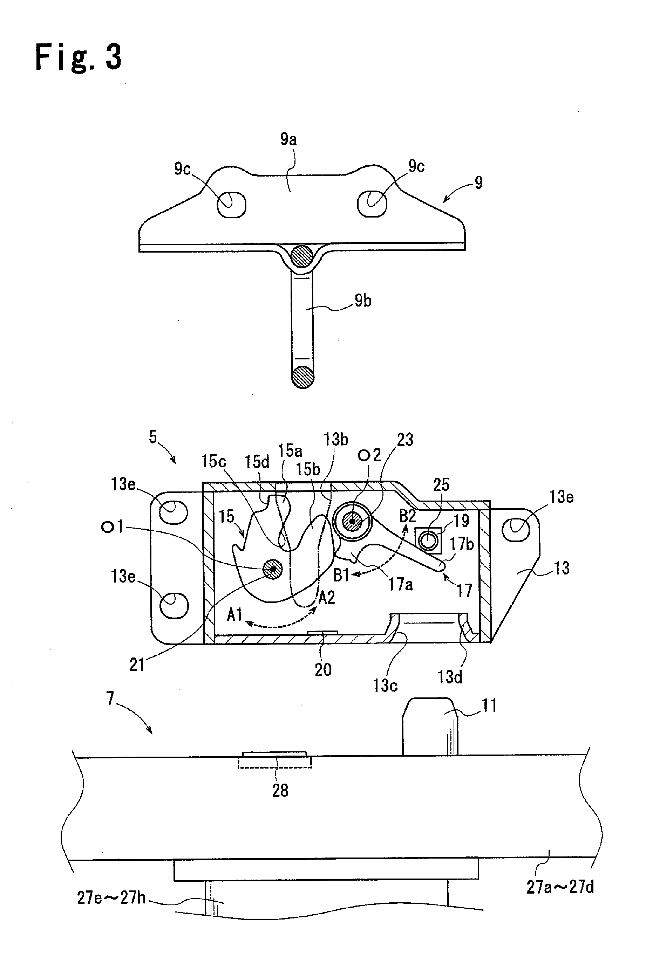

As shown in Fig. 3, each striker device 9 includes a base plate 9a, which is fixed to one of the frames 1 c shown in Fig. 1, and a striker 9b, which is fixed to the base plate 9a. The base plate 9a includes a plurality of bolt holes 9c, which are used to fix the base plate 9a to the frame 1 c. The striker 9b is formed by bending a steel material a number of times and has a substantially annular shape. The base plate 9a and the striker 9b are welded and integrated with each other. The striker 9b corresponds to a fastened portion serving as a first fastening portion.

Two striker devices 9 are fixed by bolts to each frame 1c so as to be located in the mounting cavity 1 b shown in Fig. 1. The two striker devices 9 on each frame 1c are arranged so that their strikers 9b face each other. The number of striker devices 9 attached to each frame 1c may be changed in accordance with the size of the battery unit 3. In Figs. 1 and 2, one of the frames 1c and the striker devices 9 attached to that frame 1c is not shown.

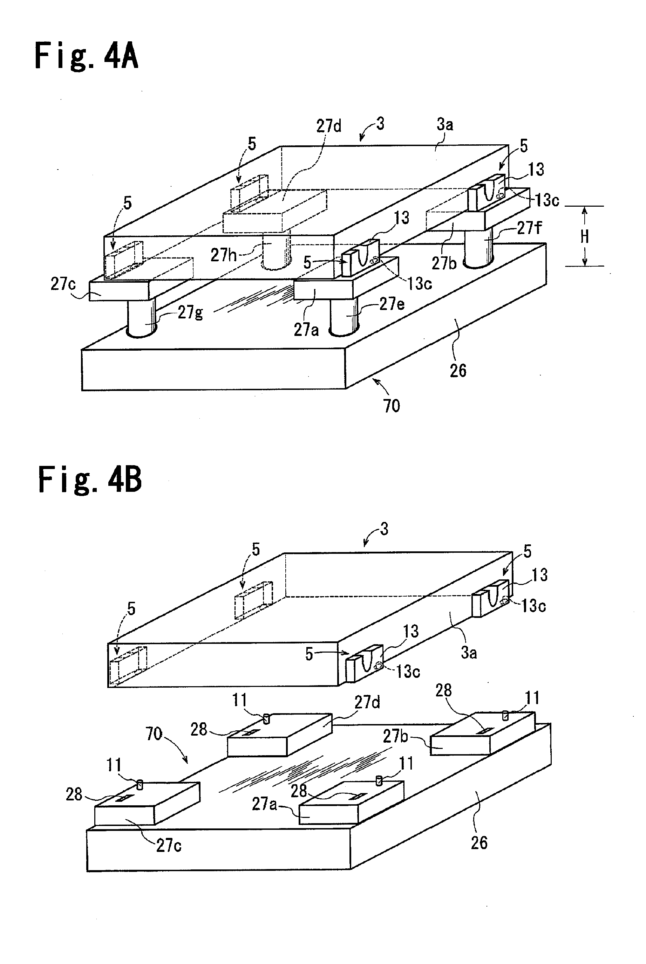

As shown in Fig. 4A, the battery unit 3 includes a rectangular box-shaped case 3a and a plurality of batteries (not shown in detail), which are accommodated in the case 3a. The case 3a includes a connection terminal (not shown), which electrically connects the batteries to the vehicle body 1a shown in Fig. 1. An in-unit controller (not shown), which includes a wireless communication unit, is also arranged in the battery unit 3. The in-unit controller communicates with the controller 70a. The shape of the case 3a can be changed when necessary in accordance with the shape of the mounting cavity 1 b shown in Fig. 1.

Two of the four lock devices 5 are attached to the side surface at each long side of the case 3a in correspondence with the four striker devices 9. As shown in Fig. 3, each lock device 5 includes a housing 13, a latch 15, a pole 17, and a first solenoid 19. A lock pin 25 is fixed to the first solenoid 19. Each lock device 5 also includes a proximity sensor 20, which serving as a detection unit. The lock device 5 corresponds to a fastening portion serving as a second fastening portion. The proximity sensor 20, for example, is a magnetic sensor that magnetically detects the approach of the latch 15.

As shown in Fig. 4A, each housing 13 is fixed to the case 3a of the battery unit 3. As shown in Fig. 3, the housing 13 includes an inlet 13b, which includes an open upper end and which extends downward. The corresponding striker 9b enters the inlet 13b. The housing 13 has an insertion hole 13c, which includes an open lower end and extends into the housing 13. A pin 11 is inserted into the insertion hole 13c. The housing 13 is bent at a wall extending around the insertion hole 13c to form a guide portion 13d, which guides the pin 11. Three bolt holes 13e are formed in the housing 13. Bolts (not shown) are inserted into the bolt holes 13e to fix the housing 13 to the case 3a.

A first shaft 21 and a second shaft 23 project from the housing 13 in a horizontal direction. The first shaft 21 includes an axis defining a first axis O1 and the second shaft 23 includes an axis defining second axis 02.

The latch 15 includes generally U-shaped recess 15c. An upper side of the recess 15c defines an upper hook 15a, and a lower side of the recess 15c defines a lower hook 15b. The recess 15c is shaped to accommodate the striker 9b that enters the inlet 13b of the housing 13. Further, a hooking surface 15d is formed on the side of the upper hook 15a opposite to the recess 15c.

Referring to Fig. 3, the latch 15 is pivotally supported by the first shaft 21 and pivots in direction A1 and direction A2. The latch 15 is biased in direction A2 by a coil spring (not shown). The latch 15 is pivoted in direction A1 and shifted to a hooking state in which the latch 15 hooks the striker 9b in the inlet 13b. The latch 15 is pivoted in direction A2 and shifted to a release state in which the latch 15 releases the striker 9b state in the inlet 13b. In this manner, the latch 15 pivots about the first axis O1 to switch between the hooking state and the release state.

The pole 17 is generally L-shaped and includes a hooking piece 17a and an operation piece 17b, which substantially extends in a direction orthogonal to the hooking piece 17a. The pole 17 is pivotally supported by the second shaft 23 and pivots in direction B1 and direction B2. The pole 17 is biased in direction B1 by a coil spring (not shown). When the pole 17 is pivoted in direction B1, the hooking piece 17a is moved to a first position at which the hooking piece 17a fixes and restricts pivoting of the latch 15. When the pole 17 is pivoted in direction B2, the hooking piece 17a is moved to a second position at which the hooking piece 17a releases and permits pivoting of the latch 15. In this manner, the pole 17 pivots about the second axis 02 to switch the hooking piece 17a between the first position and the second position.

The first solenoid 19 is electrically connected to the in-unit controller and controlled by the controller 70a of Fig. 1 through the in-unit controller and the wireless communication unit. The controller 70a drives and switches the first solenoid 19 shown in Fig. 3 between a state in which the lock pin 25 is horizontally projected in the housing 13 and a state in which the lock pin 25 is retracted into the first solenoid 19. When the lock pin 25 is horizontally projected in the housing 13, the lock pin 25 fixes and restricts pivoting of the pole 17 in direction B2. When the lock pin 25 is retracted into the first solenoid 19, the lock pin 25 releases and permits pivoting of the pole 17 in direction B2. The other parts of the first solenoid 19 are similar to that of a known solenoid and thus will not be described in detail.

The proximity sensor 20 is arranged in the housing 13. The proximity sensor 20, which is electrically connected to the in-unit controller, transmits a detection signal to the controller 70a through the in-unit controller and the wireless communication unit. Specifically, the proximity sensor 20 detects the pivoting of the latch 15 based on the positions of the striker 9b, the upper hook 15a, and the lower hook 15b in the housing 13 relative to the proximity sensor 20. The proximity sensor 20 transmits a detection signal to the controller 70a when the latch 15 is in the hooking state and the lock device 5 and striker 9b are in engagement.

As described above, the four lock devices 5 are attached to the battery unit 3, and each proximity sensor 20 detects the engagement of the corresponding lock device 5 and the striker 9b. Thus, the controller 70a receives detection signal from four locations.

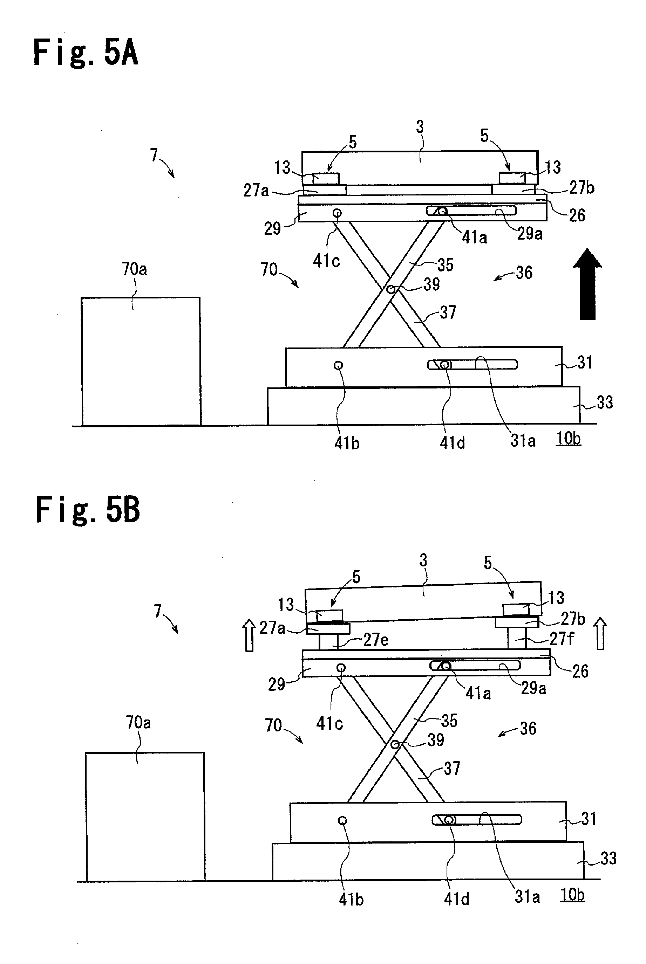

As shown in Figs. 4 and 5, the conveying apparatus main body 70 includes a basal portion 33, a support 26, an entire lifting mechanism 36, four extendible rods 27e to 27h, and four mounts 27a to 27d. The basal portion 33 is fixed to the lower floor 10b. The extendible rods 27e to 27h each serve as an individual lifting mechanism.

Referring to Fig. 5, a motor (not shown) and a gear train (not shown), which transmit power to the entire lifting mechanism 36, are arranged in the basal portion 33. The motor is electrically connected to the controller 70a.

The entire lifting mechanism 36 includes a lower holding member 31, two first link members 35, two second link members 37, and an upper holding member 29. The lower holding member 31 is fixed to the basal portion 33. The lower holding member 31 includes two elongated holes 31a extending in the horizontal direction. The upper holding member 29 includes two elongated holes 29a extending in the horizontal direction. The first and second link members 35 and 37 have the same length. A coupling pin 39 couples central parts of the first and second link members 35 and 37 so that they are pivotal. Each first link member 35 includes a lower end pivotally coupled by a coupling shaft 41 b to the lower holding member 31. Each second link member 37 includes a lower end coupled to a coupling shaft 41 d, which is connected to the gear train. The second link member 37 is pivotal to the lower holding member 31 and movable in the elongated hole 31a. Further, each second link member 37 includes an upper end pivotally coupled by a coupling shaft 41 c to the upper holding member 29. Each first link member 35 includes an upper end pivotally coupled by a coupling shaft 41 a to the upper holding member 29 so as to be movable in the elongated hole 29a. The support 26 is fixed to the upper holding member 29. An electric linear movement type cylinder, a hydraulic cylinder, or the like may be used as the entire lifting mechanism 36.

As shown in Fig. 4A, the extendible rods 27e to 27h and the mounts 27a to 27d are arranged on the support 26. The mounts 27a to 27d include lower surfaces connected to the extendible rods 27e to 27h, respectively. Each of the mounts 27a to 27d is configured to allow for the mounting of the battery unit 3. The mounts 27a to 27d each come into contact with the corresponding lock device 5 when the battery unit 3 is mounted. Referring to Fig. 4B, the pin 11 and a limit switch 28 are attached to the upper surface of each mount 27a to 27d. The pin 11 and the limit switch 28 will be described later in detail.

The extendible rods 27e to 27h can each be extended to a height H shown in Fig. 4A by four driving mechanisms (not shown) arranged on the support 26. Each of the mounts 27a to 27d can thus be individually lifted from the support 26 in a range of the height H. Each driving mechanism is electrically connected to the controller 70a.

The controller 70a is arranged in the proximity of the conveying apparatus main body 70. The controller 70a includes a switch (not shown). When the operator operates the switch, an instruction is sent to the conveying apparatus main body 70 to lift or lower the battery unit 3. In this case, the controller 70a controls the entire lifting mechanism 36 and the extendible rods 27e to 27h. The controller 70a stores a control program that individually controls the extendible rods 27e to 27h in addition to the entire lifting mechanism 36. The controller 70a functions as an individual control unit and an entire control unit. The controller 70a also functions as a stop unit that stops the lifting of the mounts 27a to 27d with the extendible rods 27e to 27h.

As shown in Fig. 4B, each limit switch 28 is arranged on the upper surface of the corresponding mount 27a to 27d at a position where the limit switch 28 comes into contact with the housing 13 of the corresponding lock device 5. Each limit switch 28 is electrically connected to the controller 70a. Further, each limit switch 28 detects contact of the lock device 5 with the corresponding one of the mounts 27a to 27d when pushed by the corresponding housing 13. Then, the limit switch 28 transmits a contact signal. Pressure sensors or the like that detect the pressure of the lock devices 5 positioned on the corresponding mounts 27a to 27d may be used in lieu of the limit switches 28.

Each pin 11 is arranged on the corresponding mount 27a to 27d at a position that allows the pin 11 to be inserted into the insertion hole 13c of the corresponding lock device 5.

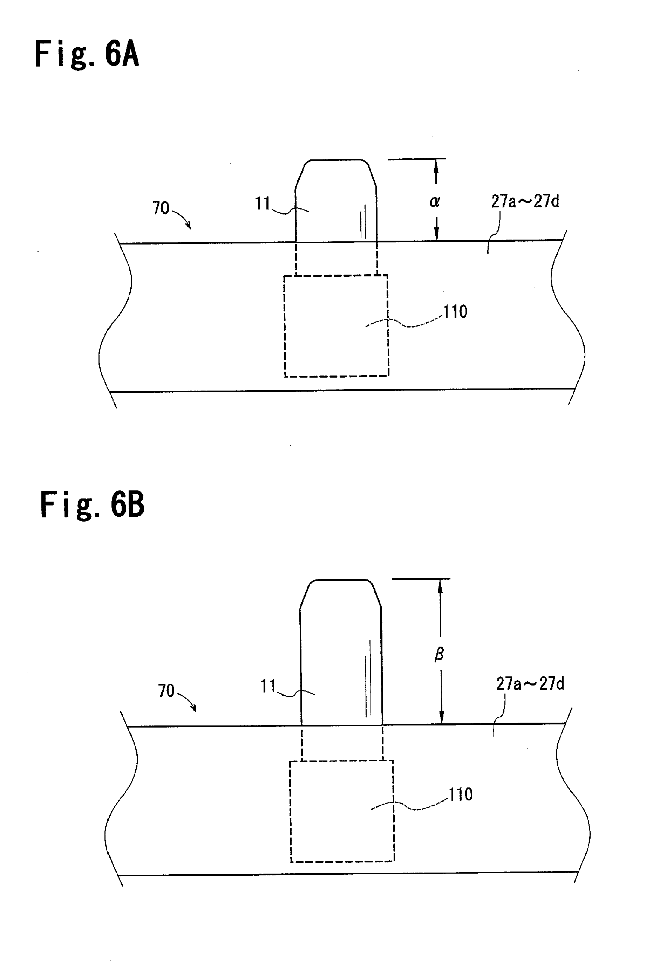

As shown in Figs. 6A and 6B, each pin 11 extends vertically upward from the surface of the corresponding mount 27a to 27d. A second solenoid 110 is arranged in each mount 27a to 27d in correspondence with the pin 11. Each pin 11 is connected to the corresponding second solenoid 110. The second solenoids 110 are electrically connected to the controller 70a shown in Fig. 5.

As shown in Figs. 6A and 6B, each second solenoid 110 is driven by a contact signal from the corresponding limit switch 28 during removal of the battery unit 3. A projecting length of each pin 11 can be varied between a first length α shown in Fig. 6A and a second length β shown in Fig. 6B. An electrical linear movement type cylinder, a hydraulic cylinder, or the like can be used in lieu of the second solenoid 110.

When each pin 11 is extended to the first length α as shown in Fig. 6A, the battery unit 3 can be positioned on the corresponding mount 27a to 27d with the pin 11 inserted in the insertion hole 13c (see Fig. 3). When each pin 11 is extended to the second length β as shown in Fig. 6B, the pin 11 comes into contact with the corresponding pole 17 shown in Fig. 3. This pivots the pole 17 in direction B2 and thereby pivots the hooking piece 17a from the first position to the second position.

In the station 10 shown in Fig. 1, the battery unit 3 is attached to and removed from the vehicle body 1 a as described below.

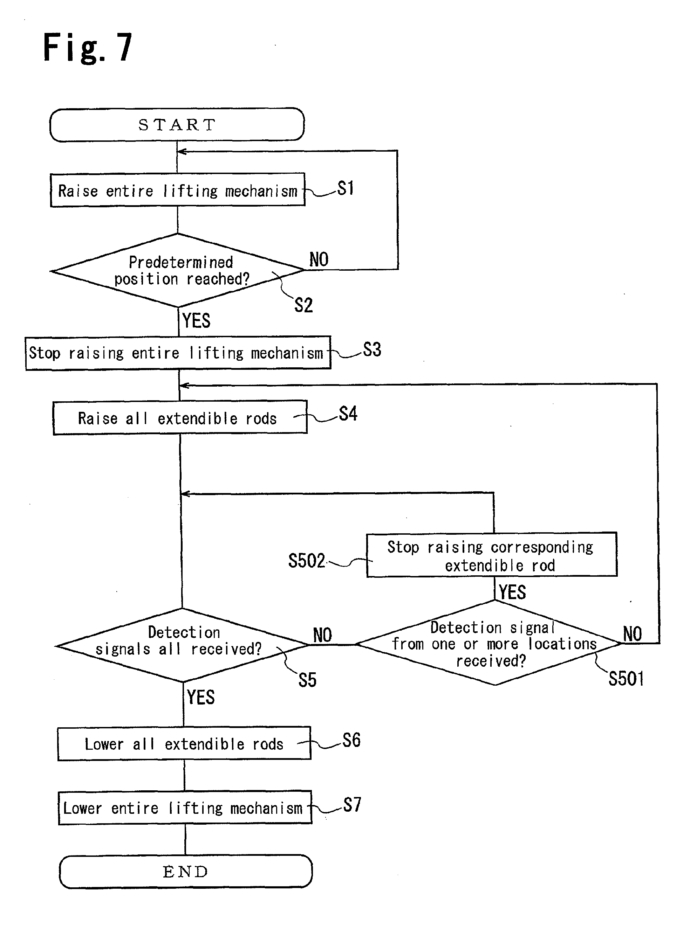

When attaching the battery unit 3 to the vehicle body 1 a with the conveying apparatus 7, the controller 70a controls the conveying apparatus main body 70 based on the flowchart shown in Fig. 7.

First, the battery unit 3 is mounted on the mounts 27a to 27d. The controller 70a then executes a control program when the operator performs a switch operation. This raises the entire lifting mechanism 36 to a predetermined position in the conveying apparatus main body 70 (step S1). A fixed movable range is set for the entire lifting mechanism 36. The upper limit of the movable range defines the predetermined position. Thus, as shown in Fig. 5A, the support 26 is raised. This lifts all of the mounts 27a to 27d and the extendible rods 27e to 27h (see black arrow in Fig. 5A).

Then, as shown in Fig. 7, the controller 70a determines whether or not the entire lifting mechanism 36 has reached the predetermined position (step S2). When the controller 70a determines that the entire lifting mechanism 36 has reached the predetermined position (step S2: YES), the controller 70a stops the raising of the entire lifting mechanism 36 (step S3). When the controller 70a determines that the entire lifting mechanism 36 has not reached the predetermined position (step S3: NO), step S1 is repeated. This continues the raising of the entire lifting mechanism 36.

After stopping the raising of the entire lifting mechanism 36, the controller 70a drives all of the driving mechanisms to synchronously raise all of the extendible rods 27e to 27h (step S4). As shown in Fig. 5B, this raises all of the extendible rods 27e to 27h. Thus, the mounts 27a to 27d and the battery unit 3 mounted thereon are all lifted (see white arrow in Fig. 5B).

When the mounts 27a to 27d and the battery unit 3 are lifted, each lock device 5 and the corresponding striker 9b are engaged. Thus, the controller 70a indirectly receives the detection signal transmitted from each proximity sensor 20 via the in-unit controller. The engagement of each lock device 5 and the corresponding striker 9b will be described later.

Tolerances are allowed for the vehicle body 1a, the battery unit 3, and the like. Further, the weight of the battery unit 3 causes deformations in the battery unit 3. Such tolerances and deformations may displace at least some of the sets of the lock devices 5 and strikers 9b at their engagement positions. In such a case, the detection signals from the four locations may not be transmitted at the same timing to the controller 70a. Thus, the controller 70a determines whether or not the detection signals have all been received, as shown in Fig. 7 (step S5).

When the controller 70a determines that the detection signals have not been all received (step S5: NO), the controller 70a determines whether or not a detection signal of the proximity sensor 20 has been received from one or more locations (step S501). When the controller 70a has not received any detection signal (step S501: NO), step S4 is repeated and all the extendible rods 27e to 27h are continuously raised.

When a detection signal has been received from the proximity sensor 20 of one or more locations (step S501: YES), the controller 70a stops raising the one of the extendible rods 27e to 27h corresponding to the detection signal (step S502). In this manner, the controller 70a repeats the processes of step S501 and step S502 until determining that the detection signals have all been received in step S5.

The processes of step S501 and step S502 will be described using a specific example. For example, when a detection signal is received from the proximity sensor 20 arranged in the lock device 5 mounted on the mount 27a shown in Fig. 4A (step S501), the controller 70a stops raising the extendible rod 27e (step S502). Further, the controller 70a continues to raise the extendible rods 27f to 27h and lift the mounts 27b to 27d until receiving other detection signals. Thus, in the conveying apparatus main body 70, the mounts 27a to 27d are lifted to different heights, as shown in Fig. 5B, in accordance with the engagement state of each lock device 5 and the corresponding striker 9b.

When the detection signals are all received (step S5: YES), as shown in Fig. 7, the battery unit 3 is attached to the vehicle body 1a. Then, the controller 70a retracts all of the extendible rods 27e to 27h, that is, drives the extendible rods 27e to 27h to lower the mounts 27a to 27d (step S6). The controller 70a then lowers the lifting mechanism (step S8). This completes the operation of the conveying apparatus main body 70.

Accordingly, the conveying apparatus 7 stops raising the extendible rods 27e to 27h corresponding to the engaged lock devices 5 and striker devices 9 and continues to raise the extendible rod 27e to 27h corresponding to the non-engaged lock devices 5 and strikers 9b. This changes the position of the battery unit 3 mounted on the mounts 27a to 27d, as shown in Fig. 5B. Thus, in the conveying apparatus 7, even when tolerances or deformations cause displacement in at least some of the sets of the lock devices 5 and the strikers 9b at their engagement positions, a hypothetical plane at the side of the battery unit 3 may be adjusted to be flat and parallel to a hypothetical plane at the side of the vehicle body 1 a, and a hypothetical plane at side of the battery unit 3 can be adjust to be twisted in the same manner as a hypothetical plane at the side of the vehicle body 1 a. Thus, the conveying apparatus 7 stably attaches the battery unit 3 to the vehicle body 1 a.

Further, in the conveying apparatus 7, the extendible rods 27e to 27g corresponding to only the sets of non-engaged lock devices 5 and strikers 9b are raised. This reduces the load on the extendible rods 27e to 27h when the lock devices 5 and the strikers 9b are engaged compared to when lifting all the mounts 27a to 27d regardless of whether or not the lock devices 5 are engaged with the strikers 9b. That is, in the conveying apparatus 7, the lock devices 5 and the strikers 9b can be engaged with a minimum load applied to the corresponding extendible rods 27e to 27h.

There is no need to enlarge the conveying apparatus main body 70 in the conveying apparatus 7. Further, since the load applied to the vehicle body 1 a and the battery unit 3 is small when attaching the battery unit 3, there is no need to reinforce the vehicle body 1 a, the battery unit 3, and the like.

In particular, the controller 70a stops raising the extendible rods 27e to 27h based on the detection signals from the corresponding proximity sensors 20. This facilitates the attachment of the battery unit 3 to the vehicle body 1 a in the conveying apparatus 7.

The conveying apparatus main body 70 of the conveying apparatus 7 not only lifts and lowers the mounts 27a to 27d with the corresponding extendible rods 27e to 27h but also raises the support 26 to simultaneously lift all of the mounts 27a to 27d. In this case, the controller 70a lifts the support 26 with the entire lifting mechanism 36 to the predetermined position, and then lifts each of the mounts 27a to 27d with the corresponding extendible rods 27e to 27h. This readily attaches the battery unit 3 to the vehicle body 1 a in the conveying apparatus 7.

The engagement and disengagement of the lock device 5 and the corresponding striker 9b will now be described. First, the attachment of the battery unit 3 will be described.

### Attachment of Battery Unit 3

As shown in Fig. 1, the electric vehicle 1 is parked at a predetermined position on the upper floor 10a of the station 10. The parking position is adjusted so that the mounting cavity 1b is located immediately above the communication port 10c, that is, the mounting cavity 1 b comes immediately above the conveying apparatus main body 70. The battery unit 3 is removed from the mounting cavity 1 b of electric vehicle 1 as will be described later.

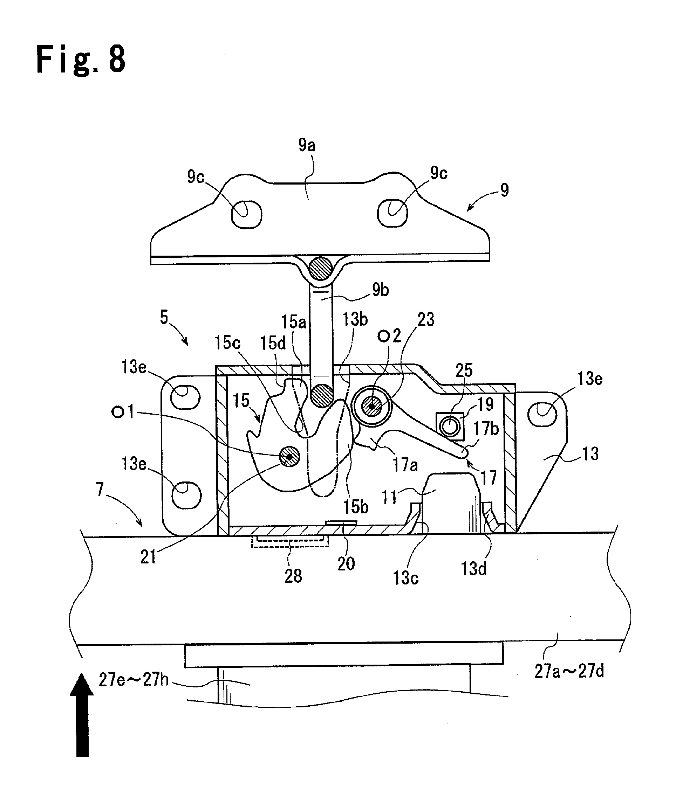

The battery unit 3 is mounted on the mounts 27a to 27d of the conveying apparatus main body 70. Each pin 11 is extended to the first length α. In this state, each pin 11 is inserted into the corresponding insertion hole 13c through the guide portion 13d, as shown in Fig. 8. This positions the battery unit 3 on the mounts 27a to 27d. Each lock pin 25 is retracted in the first solenoid 19, and the corresponding pole 17 is allowed to pivot.

In this state, the entire lifting mechanism 36 and the extendible rods 27e to 27h are driven by the controller 70a to lift the mounts 27a to 27d. This moves the battery unit 3 toward the mounting cavity 1 b, as shown by the arrow in Fig. 8. Thus, the striker 9b relatively enters the inlet 13b.

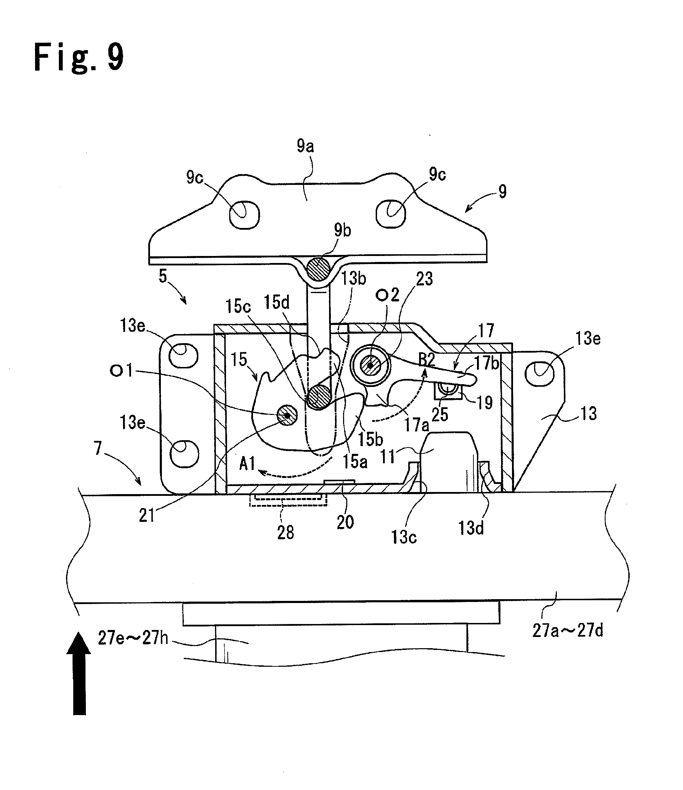

Then, referring to Fig. 9, the lower hook 15b of the latch 15 comes into contact with the striker 9b. The striker 9b pushes the latch 15. This pivots the latch 15 in direction A1 (refer to the arrow of the broken line in Fig. 9) against the biasing force of the coil spring. The lower hook 15b of the latch 15 pushes the hooking piece 17a of the pole 17. The pivots the pole 17 in direction B2 against the biasing force of the coil spring and moves the hooking piece 17a from the first position to the second position (refer to the arrow of the broken line in Fig. 9).

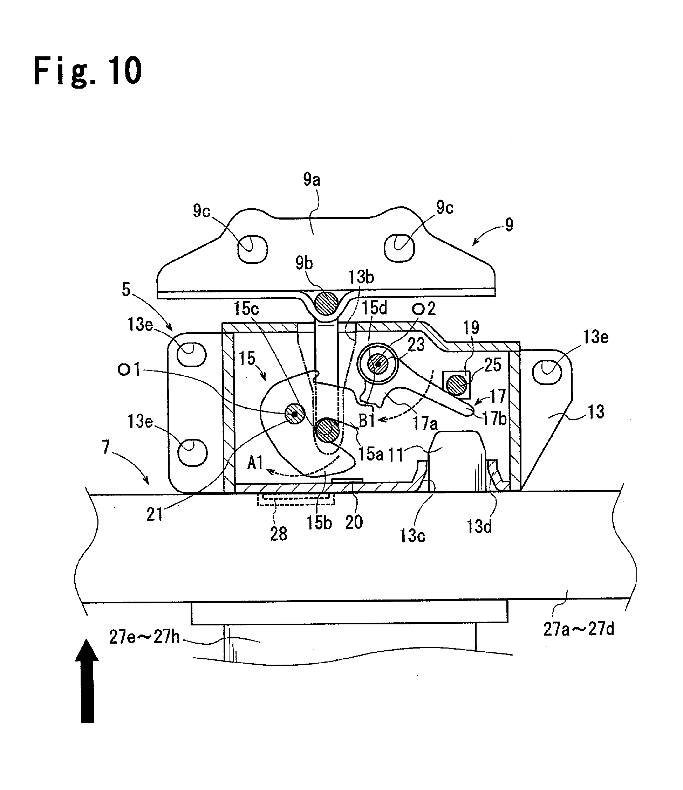

When the battery unit 3 is located in the mounting cavity 1 b as shown in Fig. 2, the pole 17 is pivoted in direction B1 by the biasing force of the coil spring, and the hooking piece 17a is moved from the second position to the first position as shown by the arrow of the broken line in Fig. 10. The hooking piece 17a thus engages the hooking surface 15d of the latch 15. In this manner, the latch 15 is shifted to the hooking state, and the striker 9b is hooked in the recess 15c.

As described above, the lock devices 5 are mounted on the mounts 27a to 27d. Thus, the lock devices 5 are sequentially engaged with the corresponding strikers 9b as each of the mounts 27a to 27d rise until the lock devices 5 are all engaged with the corresponding strikers 9b. At the same time, the batteries in the battery unit 3 are electrically connected to the electric vehicle 1.

Further, after engagement of the lock device 5 and the striker 9b, the controller 70a drives the first solenoid 19 and projects the lock pin 25 in the housing 13. This brings the operation piece 17b of the pole 17 into contact with the lock pin 25, and the lock pin 25 restricts pivoting of the pole 17 in direction B2. That is, the movement of the hooking piece 17a to the second position is restricted. Thus, the lock pin 25 fixes the pole 17, and the pole 17 fixes the latch 15.

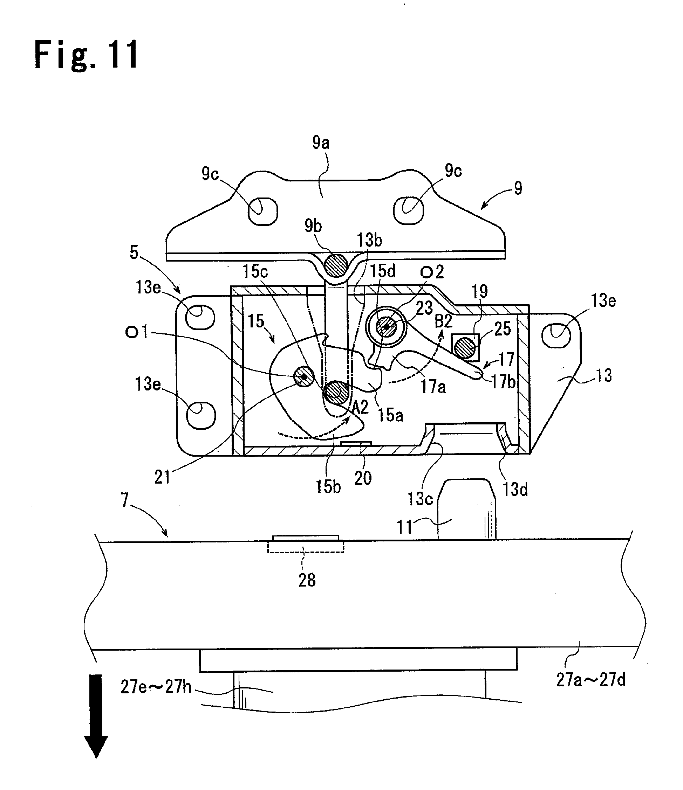

Then, referring to Fig. 11, the controller 70a lowers the mounts 27a to 27d and the entire lifting mechanism 36, as shown by the arrow of the solid line arrow. This removes the pin 11 from the insertion hole 13c, completes the engagement of the lock device 5 and the striker 9b. Further, the attachment of the battery unit 3 to the mounting cavity 1b is completed.

### Removal of Battery Unit 3

As shown in Fig. 2, the electric vehicle 1 is parked at a predetermined position on the upper floor 10a of the station 10. In the same manner as when attaching the battery unit 3, the position of the electric vehicle 1 is adjusted so that the mounting cavity 1 b is located immediately above the communication port 10c, that is, immediately above the conveying apparatus main body 70. In this state, the battery unit 3 is attached to the electric vehicle 1 in the mounting cavity 1b.

The battery unit 3 is not arranged on the mounts 27a to 27d. Each pin 11 is extended to the first length α.

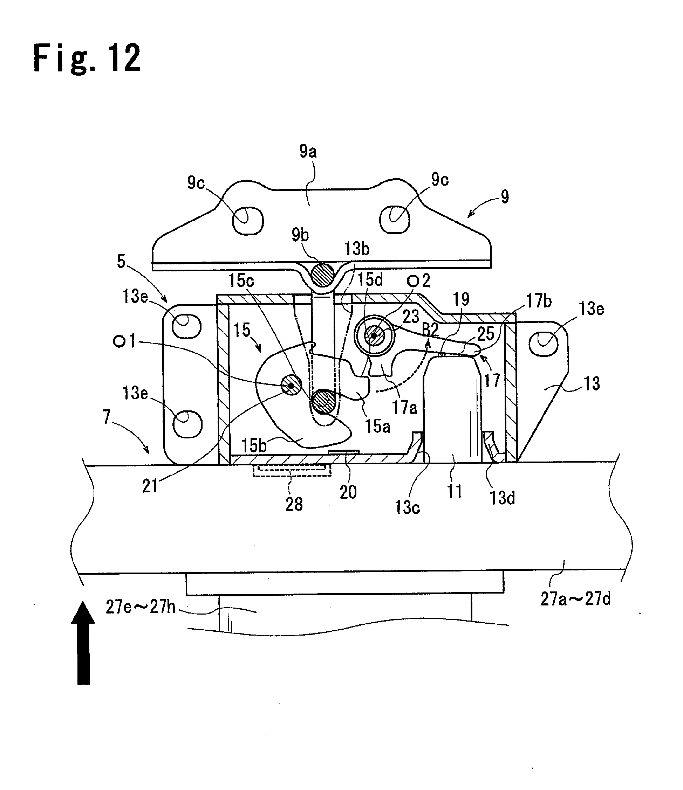

In this state, the controller 70a raises the mounts 27a to 27d and the entire lifting mechanism 36, as shown in Fig. 12. Each of the mounts 27a to 27d come into contact with the battery unit 3 and the corresponding lock devices 5 as the pin 11 on each of the mounts 27a to 27d is inserted into the corresponding insertion hole 13c. Then, each first solenoid 19 is driven to retract the lock pin 25 into the first solenoid 19. This releases the corresponding pole 17 and allows the pole 17 to pivot.

Further, contact of each of the mounts 27a to 27d with the corresponding lock device 5 pushes the limit switch 28 and transmits a contact signal. In response to the contact signal, the controller 70a drives each second solenoid 110, which is shown in Fig. 6. This extends the corresponding pin 11 to the second length β, as shown in Fig. 12. The pin 11, which is extended to the second length β, pushes the operation piece 17b of the pole 17 and pivots the pole 17 in direction B2 (refer to the arrow of the broken line in Fig. 12) against the biasing force of the coil spring. This moves the hooking piece 17a from the first position to the second position and disengages the hooking piece 17a from the hooking surface 15d of the latch 15. As a result, the latch 15 is released from the pole 17.

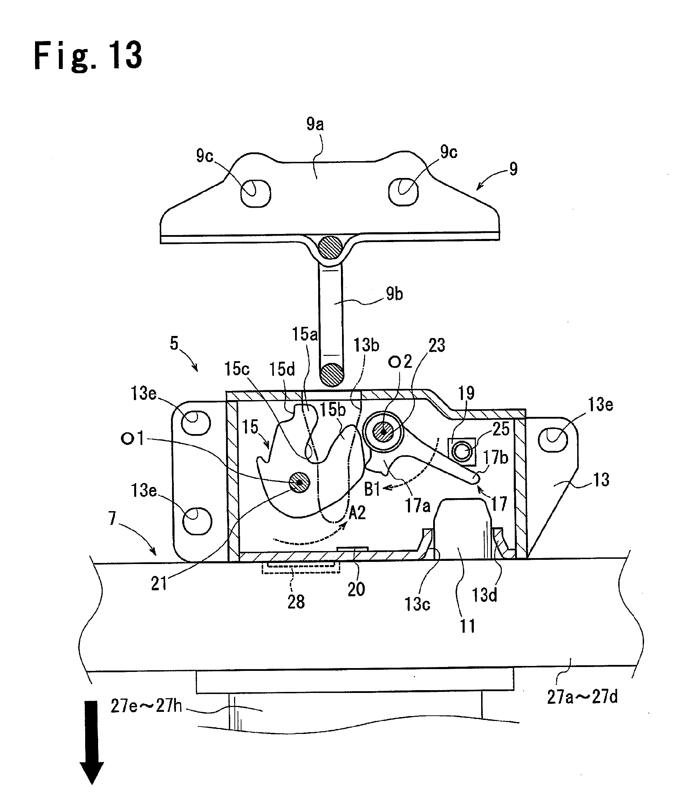

Then, as shown in Fig. 13, the mounts 27a to 27d are lowered to move the battery unit 3 downward from the mounting cavity 1b, as shown by the arrow of the solid line. The pushing force of the striker 9b and the biasing force of the coil spring pivot the upper hook 15a of each latch 15 in direction A2. Here, the latch 15 is in the release state. Thus, the striker 9b moves relatively away from the inlet 13b. In this manner, the strikers 9b are disengaged from the lock devices 5 thereby completing the removal of the battery unit 3 from the vehicle body 1a. At the same time, the batteries in the battery unit 3 are disconnected from the electric vehicle 1.

After the removal of the battery unit 3 is completed, the controller 70a drives each second solenoid 110 and retracts the corresponding pin 11 to the first length α. This moves the pin 11 away from the corresponding operation piece 17b. Then, the biasing force of the coil spring pivots the pole 17 in direction B1 by, and the hooking piece 17a is moved from the second position to the first position. Further, the entire lifting mechanism 36 is lowered. Then, the removed battery unit 3 is moved away from the mounts 27a to 27d. The pin 11 can be prevented from being damaged by changing the extended amount of the pins 11 from the second length β to the first length α before the battery unit 3 is moved away from the mounts 27a to 27d.

In this manner, the vehicle battery unit attachment device allows the battery unit 3 to be attached to and removed from the vehicle body 1a just by lifting the battery unit 3 with the conveying apparatus main body 70 to a predetermined attachment position in the vehicle body 1a, namely, the mounting cavity 1b.

Further, the fastening portions correspond to the strikers 9b in the striker devices 9, which are arranged in the vehicle body 1 a, and the fastened portions correspond to the lock devices 5 arranged in the battery unit 3. Accordingly, in the vehicle battery attachment device, the structure at the side of the vehicle body 1a can be simplified. This increases the degree of freedom for design such as the attachment position of the battery unit 3 in the vehicle body 1 a.

It should be apparent to those skilled in the art that the present invention may be embodied in many other specific forms without departing from the spirit or scope of the invention. Particularly, it should be understood that the present invention may be embodied in the following forms.

For example, a plurality of recesses may be formed in the case 3a, and the plurality of lock devices 5 may be arranged in the recesses and fixed to the case. In this case, the lock devices 5 do not project out of the battery unit 3, and the mounting cavity 1b can be miniaturized.

The controller 70a may lift the support 26 with the entire lifting mechanism 36 until one of the lock devices 5 arranged on the mounts 27a to 27d engages the striker 9b. Then, the conveying apparatus main body 70 may be controlled so that the remaining lock devices 5 engage the corresponding strikers 9b by raising the corresponding extendible rods 27e to 27h and mounts 27a to 27d.

Further, the lock devices 5 may be arranged on the vehicle body 1a, and the strikers 9b may be arranged on the battery unit 3. In this case, the proximity sensors 20 and the first solenoids 19 are electrically connected to the in-vehicle side controller arranged on the vehicle body side and controlled by the controller 70a, for example, through the wireless communication unit. Further, the fastening portions and the fastened portions are not limited to the lock devices 5 and the strikers 9b.

The controller 70a may be configured to automatically start the attachment or removal of the battery unit 3 without the need for the operator to perform a switch operation. In this case, for example, the controller 70a includes a sensor for detecting that the electric vehicle 1 is parked at a fixed position on the upper floor 10a. After the parking of the electric vehicle 1 is confirmed, a battery unit 3 is removed from the electric vehicle 1 and replaced by a new one. The controller 70a may include a transmission unit that instructs the electric vehicle 1 to start attachment or removal of the battery unit 3. In this case, the removal of the battery unit 3 or the like with the conveying apparatus main body 70 may be started when the controller 70a receives a start signal from the electric vehicle 1.

The mounts 27a to 27d do not have to directly contact the corresponding lock devices 5. Specifically, the lock devices 5 may be arranged above the mounts 27a to 27d so that the mounts 27a to 27d indirectly contact the corresponding lock devices 5. In such a structure, the position of the battery unit 3 on the mounts 27a to 27d may be changed without any problems by using the proximity sensors 20.

Further, the proximity sensors 20 can continue to constantly transmit a fixed signal to the controller 70a, and the transmission of the signal can be stopped when determined that the corresponding lock devices 5 and strikers 9b are engaged. In this case, the stopped signal serves as a detection signal for the controller 70a.

The present invention is applicable in a preferable manner to a battery exchange station.

The present examples and embodiments are to be considered as illustrative and not restrictive, and the invention is not to be limited to the details given herein, but may be modified within the scope and equivalence of the appended claims.

A conveying apparatus is configured to attach a battery unit to a vehicle body at an attachment position by engaging at least three first fastening portions, which are arranged in the vehicle body, respectively with at least three corresponding second fastening portions, which are arranged in the battery unit. The conveying apparatus includes at least three mounts, at least three individual lifting mechanisms, and an individual control unit. The second fastening portions are respectively mounted on the mounts. The individual lifting mechanisms individually lift the mounts to raise the battery unit to the attachment position. The individual control unit is configured to individually control the individual lifting mechanisms.

## Claims

1. A conveying apparatus configured to attach a battery unit (3) to a vehicle body (1 a) at an attachment position (1 b) by engaging at least three first fastening portions (9b), which are arranged in the vehicle body (1a), respectively with at least three corresponding second fastening portions (5), which are arranged in the battery unit (3), the conveying apparatus **characterized by:**
at least three mounts (27a-27d) onto which the second fastening portions (5) are respectively mounted;
at least three individual lifting mechanisms (27e-27h) that individually lift the mounts (27a-27d) to raise the battery unit (3) to the attachment position (1 b); and
an individual control unit (70a) configured to individually control the individual lifting mechanisms (27e-27h).

2. The conveying apparatus according to claim 1, **characterized in that**
the individual control unit (70a) includes at least three detection units (20) and a stop unit (70a),
each of the three detection units (20) corresponds to a set including one of the first fastening portions (9b), one of the second fastening portions (5), and one of the individual lifting mechanisms (27e-27h),
each of the three detection units (20) is arranged on either one of the corresponding first fastening portion (9b) and the corresponding second fastening portion (5),
each detection unit (20) is configured to transmit a detection signal when the corresponding first fastening portion (9b) and second fastening portion (5) are engaged with each other, and
the stop unit (70a) is configured to stop a raising operation, in response to the detection signal, performed by the individual lifting mechanism (27e-27h) corresponding to the detection unit (20) that transmitted the detection signal.

3. The conveying apparatus according to claim 1 or 2, **characterized by**:
a support (26) on which the three individual lifting mechanisms (27e-27h) are arranged;
an entire lifting mechanism (36) that lifts the support (26); and
an entire control unit (70a) configured to control the entire lifting mechanism (36).

4. The conveying apparatus according to claim 3, **characterized in that**
the entire control unit (70a) controls the entire lifting mechanism (36) to lift the support (26) to a preset height, and
the individual control unit (70a) then individually controls the individual lifting mechanisms (27e-27h) to individually lift the mounts (27a-27d).

5. The conveying apparatus according to any one of claims 1 to 4; **characterized in that**
each of the first fastening portions (9b) is either one of a striker (9b) and a lock device (5), which fixes or releases the striker (9b);
each of the second fastening portions (5) is the other one of the striker (9b) and the lock device (5);
the lock device (5) includes
a housing (13) including an inlet (13b) that allows for entrance of the striker (9b),
a latch (15) supported pivotally about a first axis (O1) by the housing (13), and
a pole (17) that fixes and restricts pivoting of the latch (15); and
the latch (15) is configured to switch between a hooking state, in which the latch (15) hooks the striker (9b) in the inlet (13b), and a release state in which the latch (15) releases the striker (9b).
